(19) Europäisches Patentamt
European Patent Office
Office européen des brevets

(11) EP 4 340 079 A1

(12) **EUROPÄISCHE PATENTANMELDUNG**

(43) Veröffentlichungstag:
20.03.2024 Patentblatt 2024/12

(21) Anmeldenummer: 23197295.1

(22) Anmeldetag: 14.09.2023

(51) Internationale Patentklassifikation (IPC):
*H01M 8/0444* (2016.01)   *H01M 8/04664* (2016.01)
*H01M 8/04791* (2016.01)   *H01M 8/12* (2016.01)

(52) Gemeinsame Patentklassifikation (CPC):
**H01M 8/04679; H01M 8/04462; H01M 8/04805;**
H01M 2008/1293

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **19.09.2022   DE 102022209840**

(71) Anmelder: **Robert Bosch GmbH**
**70442 Stuttgart (DE)**

(72) Erfinder:
• **Schaefer, Felix**
**71069 Sindelfingen (DE)**
• **Egger, Sebastian**
**78315 Radolfzell Am Bodensee (DE)**
• **Carre, Maxime**
**70469 Stuttgart (DE)**

(54) **VERFAHREN ZUM BETRIEB EINER ELEKTROCHEMISCHE VORRICHTUNG SOWIE ELEKTROCHEMISCHE VORRICHTUNG**

(57)    Die Erfindung geht aus von einem Verfahren zum Betrieb einer elektrochemischen Vorrichtung, insbesondere einer Brennstoffzellenvorrichtung, wobei zumindest eine Messeinheit (14, 20), welche zumindest eine Pumpzelle (16) und zumindest eine Messzelle (18) umfasst, in zumindest einem Verfahrensschritt zumindest einen Betriebsparameter der elektrochemischen Vorrichtung erfasst.

Es wird vorgeschlagen, dass die Pumpzelle (16) während eines Betriebs der elektrochemischen Vorrichtung diskontinuierlich betrieben wird, um in einem abgeschalteten Zustand der Pumpzelle (16) mittels der Messzelle (18) eine Degradation der elektrochemischen Vorrichtung zu erfassen.

FIG. 3

EP 4 340 079 A1

**Beschreibung**

Stand der Technik

Aus DE 10 2020 202 874 A1 ist bereits ein Verfahren zum Betrieb einer elektrochemischen Vorrichtung, insbesondere einer Brennstoffzellenvorrichtung bekannt, in welchem zumindest eine Messeinheit, welche zumindest eine Pumpzelle und zumindest eine Messzelle umfasst, in zumindest einem Verfahrensschritt zumindest einen Betriebsparameter der elektrochemischen Vorrichtung erfasst.

Offenbarung der Erfindung

Die Erfindung geht aus von einem Verfahren zum Betrieb einer elektrochemischen Vorrichtung, insbesondere einer Brennstoffzellenvorrichtung, wobei zumindest eine Messeinheit, welche zumindest eine Pumpzelle und zumindest eine Messzelle umfasst, in zumindest einem Verfahrensschritt zumindest einen Betriebsparameter der elektrochemischen Vorrichtung erfasst.

Es wird vorgeschlagen, dass die Pumpzelle während eines Betriebs der elektrochemischen Vorrichtung diskontinuierlich betrieben wird, um in einem abgeschalteten Zustand der Pumpzelle mittels der Messzelle eine Degradation der elektrochemischen Vorrichtung zu erfassen. Die elektrochemische Vorrichtung umfasst vorzugsweise zumindest eine elektrochemische Umwandlungseinheit, zu einer elektrochemischen Umwandlung zumindest eines Eduktfluids in zumindest ein Produktfluid. Besonders bevorzugt umfasst die elektrochemische Umwandlungseinheit zumindest eine Brennstoffzelle, zu einer elektrochemischen Umwandlung eines Brennstoffs, insbesondere Wasserstoff und/oder Erdgas, in ein Brennstoffabgas unter Bereitstellung von elektrischer Energie. Alternativ umfasst die elektrochemische Umwandlungseinheit zumindest ein Elektrolyseur, beispielsweise zu einer Aufspaltung von Wasser in Wasserstoff und Sauerstoff unter Aufnahme von elektrischer Energie. Die Messeinheit erfasst den Betriebsparameter vorzugsweise stromabwärts der elektrochemischen Umwandlungseinheit, bevorzugt in direktem Kontakt mit dem Produktfluid, insbesondere dem Brennstoffabgas. Vorzugsweise erfasst eine weitere Messeinheit der elektrochemischen Vorrichtung einen weiteren Betriebsparameter der elektrochemischen Vorrichtung stromaufwärts der elektrochemischen Umwandlungseinheit, bevorzugt in direktem Kontakt mit dem Eduktfluid, insbesondere dem Brennstoff. Bevorzugt ist eine Messstelle der Messeinheit direkt stromabwärts der elektrochemischen Umwandlungseinheit. Bevorzugt ist eine Messstelle der weiteren Messeinheit direkt stromaufwärts der elektrochemischen Umwandlungseinheit. Darunter, dass zwei Objekte "direkt" stromaufwärts oder stromabwärts voneinander angeordnet sind, soll insbesondere verstanden werden, dass entlang einer Strömungsrichtung eines diese Objekte durchströmenden Fluids zwischen diesen Objekten keine weiteren Objekte angeordnet sind, welche eine Zusammensetzung des Fluids verändern, wie ein Reformer, ein Nachbrenner oder dergleichen. Die direkt stromaufwärts oder stromabwärts voneinander angeordneten Objekte können in physischem Kontakt zueinander stehen oder beabstandet voneinander angeordnet sein und beispielsweise mittels Fluidleitungen, einer Verteilerplatte oder dergleichen, fluidtechnisch verbunden sein. Insbesondere können entlang der Strömungsrichtung zwischen den direkt stromaufwärts oder stromabwärts voneinander angeordneten Objekten weitere Objekte angeordnet sein, die eine Zusammensetzung des durch die Objekte strömenden Fluids nicht verändern, beispielsweise ein Temperatursensor oder dergleichen.

Die weitere Messeinheit weist vorzugsweise zumindest die gleichen im Folgenden offenbarten baulichen Merkmale wie die Messeinheit auf. Optional sind die Messeinheit und die weitere Messeinheit baugleich. Alternativ weisen die Messeinheit und die weitere Messeinheit, beispielsweise auf ihren jeweiligen Einsatzort angepasste, Merkmale auf. Die Messzelle ist vorzugsweise ein Nernstzelle. Die Messzelle und die Pumpzelle sind vorzugsweise verfahrenstechnisch seriell miteinander verschaltet. Zwischen der Pumpzelle und der Messzelle umfasst die Messeinheit vorzugsweise eine Messkammer. Die Messkammer wird vorzugsweise von einer keramischen Diffusionsbarriere der Messeinheit begrenzt, durch welche hindurch das zu untersuchende Fluid in die Messkammer diffundieren kann. Das zu untersuchende Fluid ist insbesondere das Produktfluid oder das Eduktfluid. Die Messeinheit weist vorzugsweise eine Ansprechzeit von weniger als 500 ms, bevorzugt von weniger als 200 ms, besonders bevorzugt von weniger als 100 ms auf. Eine elektrische Spannung der Messzelle wird vorzugsweise von der Messeinheit auf einen konstanten Wert, beispielsweise von 450 mV, geregelt, insbesondere so, dass in der Messkammer ein definiertes Verbrennungsluftverhältnis, insbesondere das stöchiometrische Verbrennungsluftverhältnis, vorliegt. Vorzugsweise nutzt die Messeinheit die Pumpzelle als Stellglied, um in Abhängigkeit von der Zusammensetzung des zu untersuchenden Fluids in der Messkammer Sauerstoff in oder aus der Messkammer zu pumpen. Die Pumpzelle nimmt vorzugsweise einen elektrischen Pumpstrom auf, um Sauerstoff in oder aus der Messkammer zu pumpen. Die Messeinheit gibt vorzugsweise den elektrischen Pumpstrom der Pumpzelle und/oder die elektrische Spannung der Messzelle als Betriebsparameter aus. Optional verarbeitet die Messeinheit den Pumpstrom der Pumpzelle und/oder der elektrischen Spannung der Messzelle zu einer davon abgeleitete, insbesondere proportionalen, Größe und gibt diese aus, beispielsweise einen Sauerstoff-Stoffmengenstrom, ein Verbrennungsluftverhältnis, eine Wasserstoffkonzentration oder dergleichen des untersuchten Fluids. Der mit der Messeinheit erfasste Betriebsparameter und der mit der weiteren Messeinheit erfasste weitere Betriebsparameter beschreiben vorzugsweise unterschiedliche Werte derselben Größe.

Die Pumpzelle wird von einer Steuer- oder Regeleinheit der elektrochemischen Vorrichtung während eines laufenden Betriebs der elektrochemischen Umwandlungseinheit, insbesondere während eines stationären Betriebs der elektrochemischen Vorrichtung, vorzugsweise angeschaltet und ausgeschaltet. Insbesondere wechselt die Steuer- oder Regeleinheit zwischen einer Messkonfiguration der Messeinheit und einer weiteren Messkonfiguration der Messeinheit hin und her. In der Messkonfiguration ist die Pumpzelle vorzugsweise abgeschaltet. In der Messkonfiguration gibt die Messeinheit vorzugsweise die elektrische Spannung der Messzelle oder eine davon abgeleitete Größe als Betriebsparameter aus. Bevorzugt wird die elektrische Spannung der Messzelle in der weiteren Messkonfiguration nicht auf einen konstanten Wert geregelt. Besonders bevorzugt wird die Messeinheit in der Messkonfiguration als Sprunglambdasonde betrieben. In der weiteren Messkonfiguration ist die Pumpzelle vorzugsweise eingeschaltet. In der Messkonfiguration gibt die Messeinheit vorzugsweise den Pumpstrom oder eine davon abgeleitete Größe als Betriebsparameter aus. Vorzugsweise wird die elektrische Spannung der Messzelle in der weiteren Messkonfiguration auf einen konstanten Wert geregelt. Besonders bevorzugt wird die Messeinheit in der weiteren Messkonfiguration als Breitbandlambdasonde betrieben. Ein Wechsel zwischen den Messkonfiguration erfolgt vorzugsweise durch Einschalten oder Abschalten der Pumpzelle und durch ein Abwarten einer Totzeit der Messeinheit nach dem Einschalten oder Abschalten der Pumpzelle. Die Totzeit ist dazu vorgesehen, bei einem Wechsel der Messkonfigurationen einen Fluidaustausch innerhalb der Messkammer abzuwarten. Vorzugsweise wird der Betriebsparameter in der Messkonfiguration erfasst, wenn das zu untersuchende Fluid in der Messkammer die gleiche Zusammensetzung, insbesondere das gleiche Verbrennungsluftverhältnis, wie das zu untersuchende Fluid außerhalb der Messkammer aufweist. Vorzugsweise wird der Betriebsparameter in der weiteren Messkonfiguration erfasst, wenn das zu untersuchende Fluid in der Messkammer das stöchiometrische Verbrennungsluftverhältnis aufweist, insbesondere im Gegensatz zu dem zu untersuchende Fluid außerhalb der Messkammer. Die Totzeit beträgt vorzugsweise mehr als 250 Millisekunden, bevorzugt mehr als 500 Millisekunden, besonders bevorzugt mehr als 1 Sekunde. Die Totzeit beträgt vorzugsweise weniger als 1 Minute, bevorzugt weniger als 30 Sekunden, besonders bevorzugt weniger als 10 Sekunden, optional weniger als 5 Sekunden. Die Totzeit kann als Konstante vorgegeben sein und von einem Zeitgeber der Steuer- oder Regeleinheit abgezählt werden, oder von der Steuer- oder Regeleinheit durch ein Unterschreiten einer Differenz von einem Zielwert und einem Istwert des Betriebsparameters festgestellt werden. Optional gibt die Messeinheit bei einem Wechsel der Messkonfiguration den Betriebsparameter während der Totzeit aus, um beispielsweise eine Änderungsrate der Zusammensetzung des zu untersuchenden Fluids innerhalb der Messkammer oder eine Zeitdauer bis zum Unterschreiten der Differenz von dem Zielwert und dem Istwert als zusätzlichen Betriebsparameter zu erfassen, beispielsweise zur Selbstdiagnose der Messeinheit.

Die weitere Messkonfiguration ist vorzugsweise zu einem Einstellen, insbesondere Regeln, der elektrochemischen Vorrichtung vorgesehen, beispielsweise nach einem Verfahren wie es in dem oben genannten Stand der Technik beschrieben wird. Beispielsweise stellt die Steuer- oder Regeleinheit in Abhängigkeit von dem in der weiteren Messkonfiguration ermittelten Betriebsparameter eine Strömungsrate des Eduktfluids, eine Rezirkulationsrate des Produktfluids und/oder eine elektrische Leistung der elektrochemischen Umwandlungseinheit ein, insbesondere um auf eine schwankende Zusammensetzung des Eduktfluids und/oder des Produktfluids zu reagieren. Beispielsweise wird zu einem Einstellen, insbesondere Regeln, der elektrochemischen Vorrichtung eine Brennstoffnutzung der elektrochemischen Umwandlungseinheit in Abhängigkeit von dem in der weiteren Messkonfiguration erfassten Betriebsparameter ermittelt und diese als Regelgröße verwendet. Alternativ wird der in der weiteren Messkonfiguration erfasste Betriebsparameter unmittelbar als Regelgröße verwendet.

Die Messkonfiguration ist vorzugsweise dazu vorgesehen eine Degradation der elektrochemischen Vorrichtung, insbesondere der elektrochemischen Umwandlungseinheit, zu ermitteln. Die Steuer- oder Regeleinheit umfasst vorzugsweise ein Modell einer an der elektrochemischen Umwandlungseinheit anliegenden elektrischen Spannung. Vorzugsweise umfasst das Modell eine Differenz einer Nernstspannung der elektrochemischen Umwandlungseinheit und zumindest eines Verlustterms, welcher eine Differenz einer von der elektrochemischen Umwandlungseinheit abgreifbaren elektrische Spannung gegenüber der, insbesondere theoretischen, Nernstspannung beschreibt. Beispielsweise umfasst das Modell einen Verlustterm, der einen ohmschen Verlust der elektrochemischen Umwandlungseinheit beschreibt. Beispielsweise umfasst das Modell einen Verlustterm, der eine Aktivierungsverlust der elektrochemischen Umwandlungseinheit beschreibt. Beispielweise umfasst das Modell eine Verlustterm, der einen Diffusionsverlust der elektrochemischen Umwandlungseinheit beschreibt. Vorzugsweise greift die Steuer- oder Regeleinheit die elektrische Spannung von der elektrochemischen Umwandlungseinheit oder einem an der elektrochemischen Umwandlungseinheit angeschlossenen elektrischen Inverter ab. Vorzugsweise variiert die Steuer- oder Regeleinheit den zumindest einen Verlustterm, um das Modell der erfassten elektrischen Spannung der elektrochemischen Umwandlungseinheit anzugleichen. Bevorzugt schließt die Steuer- oder Regeleinheit aus einer Veränderung des Verlustterms gegenüber einem Wert des Verlustterm eines Referenzzustands der elektrochemischen Umwandlungseinheit auf eine Degradation der elektrochemischen Umwandlungseinheit. Der Referenzzustand ist vorzugsweise ein Neuzustand der elektrochemischen Umwandlungseinheit und/oder ein während einer Wartung der elektrochemischen Vorrichtung ermittelter Zustand der elektrochemischen Umwandlungseinheit. Bei Verwendung mehrere Verlustterme in dem Modell, schließt die Steuer- oder Regeleinheit optional abhängig davon, welche Verlustterme geändert wurden und/oder in welchem Verhältnis die Verlustterme geändert wurde, um die erfassten elektrischen Spannungen der elektrochemischen Umwandlungseinheit mit dem Modell abzubilden, auf die Ursache der Degradation.

Vorzugsweise ermittelt die Steuer- oder Regeleinheit die Nernstspannung der elektrochemischen Umwandlungseinheit als, insbesondere arithmetischer, Mittelwert eines Eingangswerts der Nernstspannung an einem Edukteinlass der elektrochemischen Umwandlungseinheit und eines Ausgangswerts der Nernstspannung an einem Produktauslass der elektrochemischen Umwandlungseinheit. Alternativ wertet die Steuer- oder Regeleinheit ein auf numerischer Strömungsdynamik (CFD, engl. Computational Fluid Dynamics) basierendes Modell in Abhängigkeit von dem Ausgangswert und dem Eingangswert der Nernstspannung aus, um einen Mittelwert der Nernstspannung der elektrochemischen Umwandlungseinheit zu ermitteln. Vorzugsweise ermittelt die Steuer- oder Regeleinheit den Ausgangswert der Nernstspannung in Abhängigkeit von dem Betriebsparameter. Vorzugsweise ermittelt die Steuer- oder Regeleinheit den Eingangswert der Nernstspannung in Abhängigkeit von dem weiteren Betriebsparameter. Alternativ, insbesondere bei reinem Wasserstoff als Eduktfluid, ermittelt die Steuer- oder Regeleinheit den Eingangswert der Nernstspannung in Abhängigkeit von dem Betriebsparameter, insbesondere ohne Erfassung des weiteren Betriebsparameters mittels der weiteren Messeinheit.

Durch die erfindungsgemäße Ausgestaltung kann eine Sensorik der elektrochemischen Vorrichtung vorteilhaft einfach gehalten werden. Insbesondere kann mittels des Verfahrens mit vorteilhaft wenigen Messeinheiten sowohl eine Steuerung oder Regelung der elektrochemischen Vorrichtung als auch eine Degradationsüberwachung durchgeführt werden.

Ferner wird vorgeschlagen, dass die Messzelle während eines Betriebs der elektrochemischen Vorrichtung kontinuierliche betrieben wird. Kontinuierlich soll hier insbesondere im Gegensatz zu dem diskontinuierlichen Betrieb der Pumpzelle verstanden werden. Die Messzelle wird vorzugsweise zumindest während eines anhaltenden Betriebszustandes der elektrochemischen Vorrichtung, insbesondere eines stationären Betriebs der elektrochemischen Vorrichtung, kontinuierlich, insbesondere unterbrechungsfrei, betrieben. Es ist denkbar, dass die elektrochemische Vorrichtung zumindest einen aktiven Betriebszustand und/oder einen Betriebszustandswechsel, beispielsweise einen Betriebspunktwechsel, ein Hochfahren der elektrochemischen Vorrichtung, ein Abschalten der elektrochemischen Vorrichtung oder dergleichen, umfasst, in welchem die Messzelle abgeschaltet ist. Durch die erfindungsgemäße Ausgestaltung können Anzeichen einer Degradation der elektrochemischen Vorrichtung, insbesondere der elektrochemischen Umwandlungseinheit, vorteilhaft früh und zuverlässig erfasst werden. Insbesondere kann eine Zustand der elektrochemischen Vorrichtung mit vorteilhaft wenigen Unterbrechung protokolliert werden. Ferner verbleibt die Messeinheit vorteilhaft lange in einem messbereiten Zustand. Insbesondere kann eine Zeitdauer, in welcher die Messeinheit in den messebreiten Zustand gebracht wird, vorteilhaft gering gehalten werden, beispielsweise aufgrund eines notwendigen Abwartens eines Temperaturgleichgewichts, eines chemischen Gleichgewichts oder dergleichen.

Weiter wird vorgeschlagen, dass die Pumpzelle automatisch aktiviert wird, wenn die Messzelle eine Veränderung einer Zusammensetzung eines von der Messeinheit überwachten Produktfluids detektiert. Vorzugsweise aktiviert die Steuer- oder Regeleinheit die Pumpzelle der Messeinheit und optional eine weitere Pumpzelle der weiteren Messeinheit, wenn die Messzelle der Messeinheit und/oder eine weitere Messzelle der weiteren Messeinheit eine Veränderung einer Zusammensetzung des von der jeweiligen Messeinheit zu untersuchenden Fluids detektiert. Vorzugsweise aktiviert die Steuer- oder Regeleinheit die Pumpzelle und optional die weitere Pumpzelle, wenn sich die elektrische Spannung der Messzelle und/oder der weiteren Messzelle um mehr als 10 %, bevorzugt um mehr als 5 %, besonders bevorzugt um zumindest 1 %, verändert. Optional filtert die Steuer- oder Regeleinheit die elektrische Spannung der Messzelle, beispielsweise mittels eines Tiefpasses, zeitlicher Mittelwertbildung oder dergleichen, bevor die Steuer- oder Regeleinheit die elektrische Spannung der Messzelle auf eine Veränderung hin untersucht. Die Veränderung der elektrische Spannung der Messzelle und/oder der weiteren Messzelle kann sich auf eine Amplitude, einen zeitlichen Mittelwert, einen Effektivwert oder dergleichen der elektrischen Spannung beziehen. Optional aktiviert die Steuer- oder Regeleinheit die Pumpzelle und optional die weitere Pumpzelle nur dann, wenn die Veränderung der elektrischen Spannung der Messezelle und/oder der weiteren Messzelle länger anhält als die Totzeit der Messeinheit und/oder der weiteren Messeinheit, besonders bevorzugt länger als eine die Totzeit umfassende Gesamttotzeit einer die Messeinheit und/oder die weitere Messeinheit sowie die Steuer- oder Regeleinheit umfassenden Messstrecke der elektrochemischen Vorrichtung. Vorzugsweise führt die Steuer- oder Regeleinheit mit aktivierter Pumpzelle und optional aktivierter weiterer Pumpzelle zumindest einen Anpassungsschritt einer Steuerung oder Regelung der elektrochemischen Vorrichtung in Abhängigkeit von dem elektrischen Pumpstrom der Pumpzelle und/oder einem Pumpstrom der weiteren Pumpzelle durch, beispielsweise eine Anpassung einer Strömungsrate des Eduktfluids und/oder einer Rezirkulationsrate des Produktfluids. Vorzugsweise deaktiviert die Steuer- oder Regeleinheit die Pumpzelle und/oder die weitere Pumpzelle, wenn sich der elektrische Pumpstrom der Pumpzelle und/oder der elektrische Pumpstrom der weiteren Pumpzelle um weniger als 10 %, bevorzugt um weniger als 5 %, besonders bevorzugt um weniger als 1 % verändert, insbesondere über einen Zeitraum der länger ist als die Totzeit der Messeinheit und/oder der weiteren Messeinheit, besonders bevorzugt länger als die die Totzeit umfassende Gesamttotzeit der die Messeinheit und/oder die weitere Messeinheit sowie die Steuer- oder Regeleinheit umfassenden Messstrecke der elektrochemischen Vorrichtung.. Durch die erfindungsgemäße Ausgestaltung kann die elektrochemische Vorrichtung vorteilhaft sicher und zuverlässig gesteuert oder geregelt werden. Insbesondere wird die Steuerung oder Regelung vorteilhaft dann aktiviert, wenn ein Bedarf hierzu vorliegt, insbesondere zur Vermeidung einer zu hohen Brennstoffnutzung und/oder Verkokung der elektrochemischen Umwandlungseinheit bei einer Änderung einer Zusammensetzung des Eduktfluids.

Weiter wird vorgeschlagen, dass die Pumpzelle in einem stationären Betriebszustand der elektrochemischen Vorrichtung in regelmäßigen Abständen aktiviert wird um den Betriebsparameter zu kontrollieren. Vorzugsweise aktiviert die Steuer- oder Regeleinheit die Pumpzelle und optional die weitere Pumpzelle zumindest einmal pro Tag, vorzugsweise zumindest einmal in 12 Stunden, besonders bevorzugt zumindest einmal pro Stunde, optional zumindest einmal in 10 Minuten. Optional setzt die Steuer- oder Regeleinheit einen Zeitgeber zur Aktivierung der Pumpzelle zurück, wenn die Steuer- oder Regeleinheit die Pumpzelle aufgrund einer Veränderung des zu untersuchenden Fluids aktiviert. Alternativ aktiviert die Steuer- oder Regeleinheit die Pumpzelle und optional die weitere Pumpzelle unabhängig von einer vorherigen Aktivierung der Pumpzelle und optional der weitere Pumpzelle aufgrund einer Veränderung des zu untersuchenden Fluids. Durch die erfindungsgemäße Ausgestaltung kann die elektrochemische Vorrichtung vorteilhaft sicher und zuverlässig betrieben werden. Insbesondere kann vorteilhaft auch auf Änderungen des Eduktfluids reagiert werden, welche in der Messkonfiguration von der Messzelle, insbesondere allein, nicht detektiert werden.

Weiter wird vorgeschlagen, dass die Pumpzelle automatische aktiviert wird, wenn eine, insbesondere die bereits genannte, Steuer- oder Regeleinheit der elektrochemischen Vorrichtung einen Lastwechsel detektiert oder vorgibt. Die Steuer- oder Regeleinheit erkennt einen, insbesondere spontanen, Lastwechsel beispielsweise in Abhängigkeit von einem von einer Last vorgegeben Sollwert des von der elektrochemischen Umwandlungseinheit bereitgestellten elektrischen Stroms. Alternativ oder zusätzlich ist in einem Speicher der Steuer- oder Regeleinheit ein zeitliches Lastprofil hinterlegt, welches zumindest zwei verschiedene Lastphasen aufweist, beispielsweise zu einem Tag-Nacht-Lastwechsel, einem tageweisen Lastwechsel, einem wochenweisen Lastwechsel, einem saisonweisen Lastwechsel oder dergleichen. Durch die erfindungsgemäße Ausgestaltung kann die elektrochemische Vorrichtung vorteilhaft sicher und zuverlässig betrieben werden. Insbesondere kann die weitere Messkonfiguration zu einer Steuerung oder Regelung der elektrochemischen Vorrichtung vorteilhaft frühzeitig eingestellt werden.

Weiter wird vorgeschlagen, dass bei einem Wasserstoffbetrieb der elektrochemischen Vorrichtung, die Degradation in Abhängigkeit von einer Brennstoffnutzung der elektrochemischen Vorrichtung und in Abhängigkeit von einer Ausgabe der Messzelle bei einem abgeschalteten Zustand der Pumpzelle ermittelt wird. Die Brennstoffnutzung ist vorzugsweise die Brennstoffnutzung der elektrochemischen Umwandlungseinheit. Die Brennstoffnutzung ist insbesondere ein Verhältnis von in der in dem Produktfluid enthaltenen oxidierten Bestandteilen zu den in dem Eduktfluid bei Eintritt in die elektrochemische Umwandlungseinheit enthaltenen oxidierbaren Bestandteilen. In dem Wasserstoffbetrieb wird der elektrochemischen Vorrichtung vorzugsweise als Eduktfluid, insbesondere reiner, Wasserstoff zugeführt. Optional umfasst das Eduktfluid in dem Wasserstoffbetrieb zusätzlich Wasser und/oder ein Inertgas. Insbesondere ist das Eduktfluid in dem Wasserstoffbetrieb frei von oxidierbarem Kohlenstoff, insbesondere frei von Kohlenstoffmonoxid und Kohlenwasserstoffen. Vorzugsweise erfasst die Messeinheit einen Wasserstoffstoffmengenanteil des Produktfluids, wobei die Steuer- oder Regeleinheit in Abhängigkeit davon und von der Brennstoffnutzung einen Wasserstoffstoffmengenanteil in dem Eduktfluid. Alternativ erfasst die weitere Messeinheit den Wasserstoffstoffmengenanteil des Eduktfluids, wobei die Steuer- oder Regeleinheit in Abhängigkeit davon und von der Brennstoffnutzung den Wasserstoffstoffmengenanteil in dem Produktfluid erfasst. Die Steuer- oder Regeleinheit verwendet zur Ermittlung des Wasserstoffstoffmengenanteils $x_{H2,Produkt}$ des Produktfluids oder zur Ermittlung des Wasserstoffstoffmengenanteils $x_{H2,Edukt}$ des Eduktfluids vorzugsweise die Rechenvorschrift:

$$FU_{stk} = \frac{x_{H_2,Edukt} - x_{H_2,Produkt}}{x_{H_2 Edukt}}$$

wobei $FU_{stk}$ die Brennstoffnutzung der elektrochemischen Umwandlungseinheit bezeichnet. Alternativ erfasst die Messeinheit den Wasserstoffmengenanteils des Produktfluids und die weitere Messeinheit den Wasserstoffmengenanteils des Eduktfluids. Die Brennstoffnutzung der elektrochemischen Umwandlungseinheit kann beispielsweise mittels einer iterativen Regelung der elektrochemischen Vorrichtung ermittelt werden, in welcher eine systemweite Brennstoffnutzung der elektrochemischen Vorrichtung durch eine Korrelation der systemweite Brennstoffnutzung mit dem von der Messeinheit erfassten Betriebsparameter ermittelt wird. Durch die erfindungsgemäße Ausgestaltung kann eine Überwachung der Degradation mit nur einer der Messeinheiten durchgeführt werden.

Weiter wird vorgeschlagen, dass die Messeinheit während eines Betriebs der elektrochemischen Vorrichtung kontinuierliche temperiert wird. Die Messeinheit wird vorzugsweise unabhängig davon temperiert, ob die Pumpzelle eingeschaltet oder ausgeschaltet ist. Eine Temperierung der Messeinheit kann mittels eines in der Messeinheit integrierten elektrischen Heizelements oder mittels eines von der Messeinheit unterschiedlich ausgebildeten elektrischen Heizelements erfolgen. Vorzugsweise regelt die Steuer- oder Regeleinheit oder ein internes Regelelement der Messeinheit eine Temperatur der Messeinheit, insbesondere der Messkammer, auf einen konstanten Wert. Vorzugsweise gilt gleiches für die weitere Messeinheit. Durch die erfindungsgemäße Ausgestaltung kann eine Zusammensetzung des zu untersuchenden Fluids vorteilhaft unabhängig von einer Temperatur des zu untersuchenden Fluids gehalten werden. Insbesondere kann vorteilhaft schnell zwischen den Messkonfigurationen hin- und her geschaltet werden, ohne auf einen Temperaturausgleich der Messeinheit warten zu müssen.

Weiter wird vorgeschlagen, dass als Messeinheit eine Breitbandlambdasonde verwendet wird. Vorzugsweise wird als weitere Messeinheit eine Breitbandlambdasonde verwendet. Alternativ wird als Messeinheit oder als weitere Messeinheit eine Einheit verwendet, welche zumindest eine Brennstoffzelle umfasst, die als Nernstzelle betrieben wird, und welche optional stromaufwärts dieser Brennstoffzelle zumindest eine weitere Brennstoffzelle umfasst, welche als Pumpzelle betrieben wird und welche in Abhängigkeit von einem Messwert, der als Nernstzelle betriebenen Brennstoffzelle, Sauerstoff in das oder aus dem zu untersuchenden Fluid pumpt. Durch die erfindungsgemäße Ausgestaltung kann das Verfahren vorteilhaft kostengünstig, vorteilhaft präzise und mit vorteilhaft schnellen Schaltzeiten zwischen den Messkonfigurationen durchgeführt werden.

Weiter wird vorgeschlagen, dass mittels eines maschinellen Lernprozesses eine Korrektur einer Ausgabe der Messeinheit ermittelt wird. Der maschinelle Lernprozess wird beispielsweise dazu eingesetzt, um einen Fehler $\varepsilon$ des mittels der Messeinheit und/oder der weiteren Messeinheit erfassten Wert $h_S$ des Betriebsparameters zu schätzen und einen korrigierten Wert $h_{ziel}$ des Betriebsparameters auszugeben, insbesondere in der Form $h_{ziel} = h_s + \varepsilon$. Der maschinelle Lernprozess wird vorzugsweise im Vorfeld des Verfahrens mit Trainingsdaten für die Abschätzung des Fehlers $\varepsilon$ in verschiedenen Betriebspunkten der elektrochemischen Vorrichtung trainiert. Der maschinelle Lernprozess kann als Funktion zumindest einer Messgröße der Messeinheit und/oder der weiteren Messeinheit wie dem Pumpstrom, einer elektrischen Pumpspannung der Pumpzelle, einer Temperatur des zu untersuchenden Fluids und/oder der Nernstspannung und/oder als Funktion zumindest eines weiteren Betriebsparameters der elektrochemischen Vorrichtung, wie einer Komponententemperatur, einer Temperatur, einem Druck, einer Strömungsrate des Produktfluids und/oder des Eduktfluids oder dergleichen, aufgesetzt werden. Der Fehler $\varepsilon$ stellt vorzugsweise eine Ausgangsgrö-ße dar, auf welche der maschinelle Lernprozess eingelernt wird. Der maschinelle Lernprozess ist beispielsweise als multivariate lineare Regression, als neuronales Netz und/oder als ein Gauß-Prozess ausgebildet. Durch die erfindungsgemä-ße Ausgestaltung kann der Betriebsparameter vorteilhaft präzise und vorteilhaft zuverlässig ermittelt werden.

Ferner wird eine elektrochemische Vorrichtung, insbesondere Brennstoffzellenvorrichtung, mit zumindest einer, insbesondere der bereits genannten und/oder der bereits genannten, weiteren Messeinheit zu einer Durchführung eines erfindungsgemäßen Verfahrens vorgeschlagen. Die Messeinheit und die weitere Messeinheiten sind vorzugsweise baugleich ausgebildet. Die Messeinheit und die weitere Messeinheit sind vorzugsweise als Breitbandlambdasonden ausgebildet. Die elektrochemische Vorrichtung umfasst vorzugsweise die Steuer- oder Regeleinheit, zu einem Steuern oder Regeln der elektrochemischen Vorrichtung, insbesondere in Abhängigkeit von dem mit der zumindest einen Messeinheit erfassten Betriebsparameter. Unter einer "Steuer- oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einem Speicher sowie mit einem in dem Speicher gespeicherten Betriebsprogramm verstanden werden.

Die elektrochemische Vorrichtung umfasst vorzugsweise die elektrochemische Umwandlungseinheit. Die elektrochemische Umwandlungseinheit umfasst vorzugsweise zumindest eine Brennstoffzelle oder einen Elektrolyseur, vorzugsweise einen Stack an, insbesondere baugleichen, Brennstoffzellen oder Elektrolyseuren oder einen Verbund mehrerer Stacks an, insbesondere baugleichen, Brennstoffzellen oder Elektrolyseuren. Die zumindest eine Brennstoffzelle ist vorzugsweise als Hochtemperaturbrennstoffzelle, insbesondere eine Festoxidbrennstoffzelle oder eine Schmelzkarbonatbrennstoffzelle, ausgebildet. Alternativ ist die Brennstoffzelle eine Phosphorsäurebrennstoffzelle, eine Direktmethanolbrennstoffzelle oder eine Polymerelektrolytmembranbrennstoffzelle. Die zumindest eine Brennstoffzelle umfasst vorzugsweise zumindest eine Brennstoffelektrode zu einem direkten Kontakt mit dem als Brennstoff ausgebildeten Eduktfluid. Die zumindest eine Brennstoffzelle umfasst vorzugsweise zumindest eine Sauerstoffelektrode zu einem direkten Kontakt mit einem sauerstoffhaltigen Fluid als Eduktfluid. Der zumindest eine Elektrolyseur ist vorzugsweise als Hochtemperaturelektrolyseur ausgebildet, insbesondere als Festoxidelektrolyseurzelle.

Die elektrochemische Vorrichtung umfasst vorzugsweise die Rezirkulationsleitung zu einer Rückspeisung des Produktfluids in das Eduktfluid. Vorzugsweise umfasst die elektrochemische Vorrichtung zumindest eine Eduktfluidfördereinheit oder ein Eduktfluidabsperrorgan, zu einer Einstellung einer Zustromrate an frischem Eduktfluid zu der elektrochemischen Umwandlungseinheit, insbesondere zu der Brennstoffelektrode der elektrochemischen Umwandlungseinheit. Vorzugsweise umfasst die elektrochemische Vorrichtung, insbesondere zumindest eine in der Rezirkulationsleitung angeordnete Rezirkulationsfördereinheit, zu einer Einstellung einer Rezirkulationsrate des Produktfluids. Vorzugsweise umfasst die Brennstoffzellenvorrichtung zumindest eine Sauerstofffördereinheit oder ein Sauerstoffabsperrorgan, zu einer Einstellung einer Zustromrate an sauerstoffhaltigem Fluid zu der elektrochemischen Umwandlungseinheit, insbesondere der Sauerstoffelektrode der elektrochemischen Umwandlungseinheit. Die elektrochemische Vorrichtung umfasst vorzugsweise einen Nachbrenner, der insbesondere an einem Auslass der Brennstoffelektrode und an einem Auslass der Sauerstoffelektrode der elektrochemischen Umwandlungseinheit angeschlossen ist, und der zu einem Umsetzen von Brennstoffresten in dem Produktfluid vorgesehen ist. Optional, insbesondere bei einer Verwendung eines kohlenwasserstoffhaltigen Brennstoffs als Eduktfluid, umfasst die Brennstoffzellenvorrichtung einen Entschwefler und/oder einen Reformer, zu einer Aufbereitung des Brennstoffs vor einer Einspeisung des Brennstoffs in die elektrochemische Umwandlungseinheit. Vorzugsweise umfasst die elektrochemische Vorrichtung zumindest einen Wärmeübertrager zu einer Wärmeübertragung von einem Nachbrennerabgas des Nachbrenners und/oder von dem Produktfluid auf das Eduktfluid, insbesondere auf das sauerstoffhaltige Fluid und/oder auf den Brennstoff. Die Messeinheit ist vorzugsweise stromabwärts der elektrochemischen Umwandlungseinheit angeordnet, insbesondere fluidtechnisch zwischen der Brennstoffelektrode und dem Nachbrenner. Die weitere Messeinheit ist vorzugsweise stromaufwärts der elektrochemischen Umwandlungseinheit angeordnet, insbesondere fluidtechnisch zwischen dem Reformer und der Brennstoffelektrode.

Durch die erfindungsgemäße Ausgestaltung kann eine Brennstoffzellenvorrichtung bereitgestellt werden, welche mit einer vorteilhaft einfachen und kostengünstigen Messeinheit mit vorteilhaft wenig Aufwand und/oder vorteilhaft präzise gesteuert oder geregelt sowie bezüglich einer Degradation überwacht werden kann.

Das erfindungsgemäße Verfahren und/oder die erfindungsgemäße elektrochemische Vorrichtung sollen/soll hierbei nicht auf die oben beschriebene Anwendung und Ausführungsform beschränkt sein. Insbesondere können/kann das erfindungsgemäße Verfahren und/oder die erfindungsgemäße elektrochemische Vorrichtung zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

Fig. 1   eine schematische Darstellung einer erfindungsgemäßen elektrochemischen Vorrichtung,

Fig. 2   eine schematische Darstellung einer Messeinheit der erfindungsgemäßen elektrochemischen Vorrichtung und

Fig. 3   ein schematisches Flussdiagramm eines erfindungsgemäßen Verfahrens.

Beschreibung des Ausführungsbeispiels

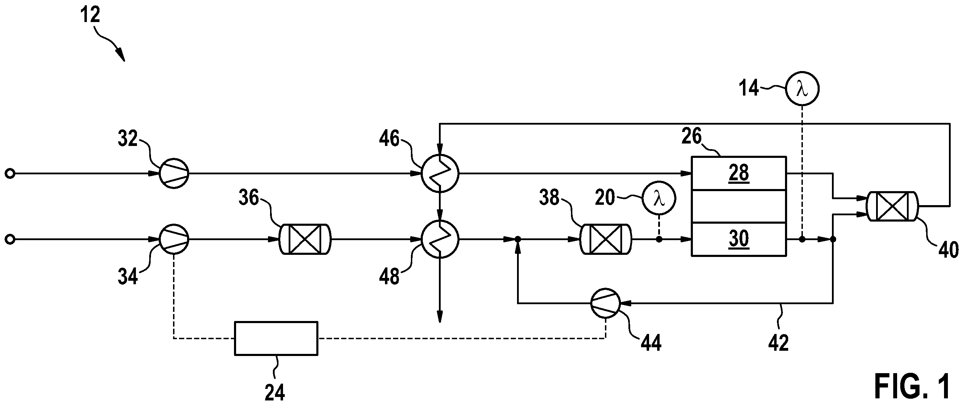

Figur 1 zeigt eine elektrochemische Vorrichtung 12. Die elektrochemische Vorrichtung 12 ist beispielsweise als Brennstoffzellenvorrichtung ausgebildet. Die elektrochemische Vorrichtung 12 umfasst vorzugsweise zumindest eine elektrochemische Umwandlungseinheit 26. Die elektrochemische Umwandlungseinheit 26 umfasst zumindest eine Brennstoffzelle, bevorzugt eine Vielzahl an Brennstoffzellen, welche besonders bevorzugt in zumindest einem Stack angeordnet sind. Die elektrochemische Umwandlungseinheit 26 ist hier der Übersicht halber funktional als einzelne Brennstoffzelle dargestellt. Die elektrochemische Umwandlungseinheit 26, insbesondere jede Brennstoffzelle der elektrochemischen Umwandlungseinheit 26, umfasst zumindest eine Sauerstoffelektrode 28 und zumindest eine Brennstoffelektrode 30. Besonders bevorzugt ist die zumindest eine Brennstoffzelle, insbesondere alle Brennstoffzellen der elektrochemischen Umwandlungseinheit 26, als Festoxidbrennstoffzelle (SOFC) ausgebildet.

Die elektrochemische Vorrichtung 12 umfasst vorzugsweise eine Sauerstofffördereinheit 32, insbesondere einen Ventilator, ein Gebläse oder einen Verdichter, zu einer Förderung eines sauerstoffhaltigen Fluids zu der Sauerstoffelektrode 28. Das sauerstoffhaltige Fluid ist besonders bevorzugt Umgebungsluft, welche von der Sauerstofffördereinheit 32 angesaugt wird. Alternativ ist das sauerstoffhaltige Fluid ein Industriegas mit einem definierten Sauerstoffanteil. Die Sauerstofffördereinheit 32 ist bezogen auf das sauerstoffhaltige Fluid stromaufwärts der Sauerstoffelektrode 28 angeordnet.

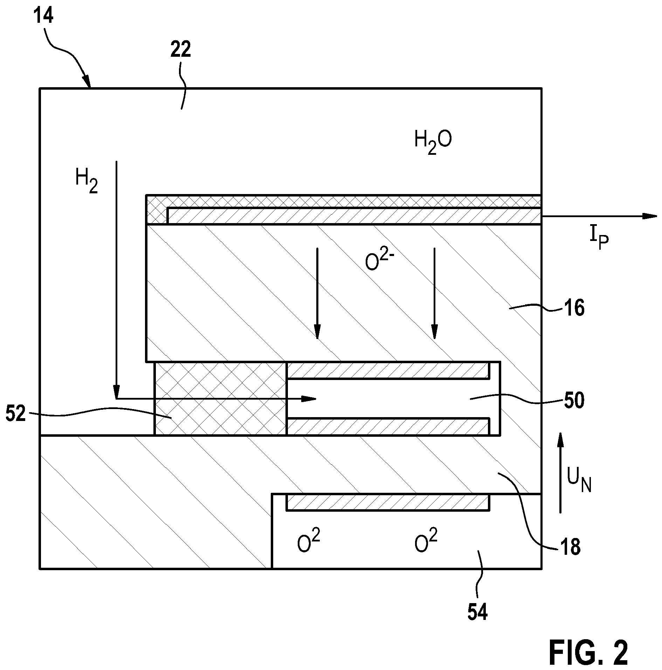

Die elektrochemische Vorrichtung 12 umfasst vorzugsweise eine Eduktfluidfördereinheit 34, insbesondere einen Ventilator, ein Gebläse oder einen Verdichter, zu einer Förderung eines Edukfluids, insbesondere eines Brennstoffs, zu der Brennstoffelektrode 30. Der Brennstoff ist bevorzugt Wasserstoff und/oder Erdgas. Alternativ umfasst der Brennstoff zumindest ein Kohlenwasserstoff als Reinstoff oder als Gemisch und/oder Ammoniak. Die Eduktfluidfördereinheit 34 ist bezogen auf den Brennstoff stromaufwärts der Brennstoffelektrode 30 angeordnet. Die elektrochemische Umwandlungseinheit 26 ist zu einem Bereitstellen von elektrischer Energie vorzugsweise dazu vorgesehen, den Brennstoff unter Zuführung von Sauerstoff aus dem sauerstoffhaltigen Fluid zu einem Produktfluid 22 umzusetzen (vgl. Fig. 2).

Optional umfasst die elektrochemische Vorrichtung 12 einen Entschwefler 36. Der Entschwefler 36 ist vorzugsweise bezogen auf das Eduktfluid stromabwärts der Eduktfluidfördereinheit 34 und stromaufwärts der elektrochemischen Umwandlungseinheit 26 angeordnet. Optional umfasst die elektrochemischen Vorrichtung 12 einen Reformer 38, zu einem Reformieren des Eduktfluids. Der Reformer 38 ist vorzugsweise bezogen auf das Eduktfluid stromabwärts der Eduktfluidfördereinheit 34, insbesondere stromabwärts des Entschweflers 36, und stromaufwärts der elektrochemischen Umwandlungseinheit 26 angeordnet.

Vorzugsweise umfasst die elektrochemische Vorrichtung 12 eine Rezirkulationsleitung 42 und eine, insbesondere in oder an der Rezirkulationsleitung 42 angeordnete, Rezirkulationsfördereinheit 44, insbesondere einen Ventilator, ein Gebläse oder einen Verdichter, zu einer Rückführung des aus der Brennstoffelektrode 30 austretenden Produktfluids in das Eduktfluid stromaufwärts der Brennstoffelektrode 30. Eine Einspeisemündung der Rezirkulationsleitung 42 ist bezogen auf das Eduktfluid vorzugsweise stromaufwärts des Reformers 38 und stromabwärts des Entschweflers 36 angeordnet.

Die elektrochemische Vorrichtung 12 umfasst vorzugsweise einen Nachbrenner 40, zu einem Umsetzen von Brennstoffresten, die in dem Produktfluid enthalten sind. Der Nachbrenner 40 ist vorzugsweise bezogen auf das Produktfluid stromabwärts der Brennstoffelektrode 30 und insbesondere stromabwärts einer Abzweigung in die Rezirkulationsleitung 42 angeordnet. Der Nachbrenner 40 ist vorzugsweise bezogen auf das sauerstoffhaltige Fluid stromabwärts der Sauerstoffelektrode 28 angeordnet. Vorzugsweise umfasst die elektrochemische Vorrichtung 12 einen Abgas-Sauerstoff-Wärmeübertrager 46 zu einer Übertragung von Wärme von einem aus dem Nachbrenner 40 austretenden Nachbrennerabgas des Nachbrenners 40 auf das sauerstoffhaltige Fluid stromaufwärts der elektrochemischen Umwandlungseinheit 26. Der Abgas-Sauerstoff-Wärmeübertrager 46 ist bezogen auf das sauerstoffhaltige Fluid vorzugsweise stromabwärts der Sauerstofffördereinheit 32 und stromaufwärts der elektrochemischen Umwandlungseinheit 26 angeordnet. Vorzugsweise umfasst die elektrochemische Vorrichtung 12 einen Abgas-Eduktfluid-Wärmeübertrager 48 zu einer Übertragung von Wärme von dem aus dem Nachbrenner 40 austretenden Nachbrennerabgas des Nachbrenners 40 auf das Eduktfluid stromaufwärts der elektrochemischen Umwandlungseinheit 26. Der Abgas-Eduktfluid-Wärmeübertrager 48 ist bezogen auf das Eduktfluid vorzugsweise stromabwärts des Entschweflers 36 und stromaufwärts der Einspeisemündung der Rezirkulationsleitung 42 angeordnet. Der Abgas-Eduktfluid-Wärmeübertrager 48 ist hier beispielhaft bezogen auf das Nachbrennerabgas stromabwärts des Abgas-Sauerstoff-Wärmeübertragers 46 angeordnet. Alternativ ist der Abgas-Sauerstoff-Wärmeübertrager 46 bezogen auf das Nachbrennerabgas stromabwärts des Abgas-Eduktfluid-Wärmeübertragers 48 angeordnet.

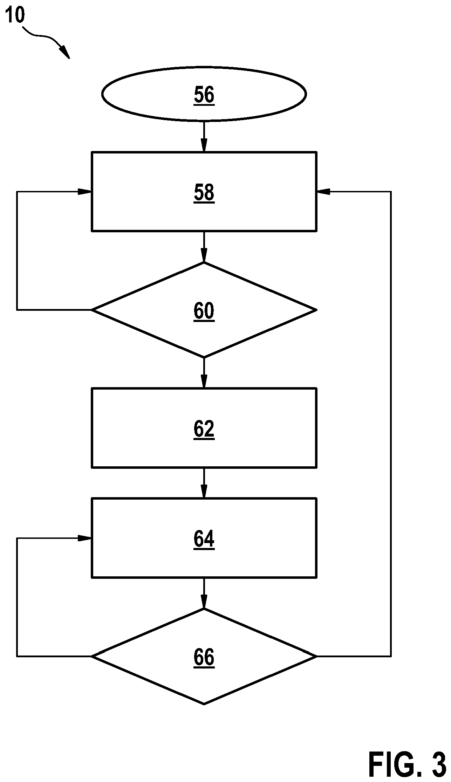

Die elektrochemische Vorrichtung 12 umfasst zumindest eine Steuer- oder Regeleinheit 24. Die Steuer- oder Regeleinheit 24 ist vorzugsweise zu einem Ansteuern der Eduktfluidfördereinheit 34, der Rezirkulationsfördereinheit 44 und/oder der Sauerstofffördereinheit 32 vorgesehen, um eine Strömungsrate des Eduktfluids und/oder des sauerstoffhaltigen Fluids durch die elektrochemische Umwandlungseinheit 26 einzustellen. Die Steuer- oder Regeleinheit 24 ist zu einer Durchführung eines Verfahrens 10 vorgesehen, das in der nachfolgenden Figur 3 näher erläutert wird.

Die elektrochemische Vorrichtung 12 umfasst zumindest eine Messeinheit 14. Die Messeinheit 14 ist bevorzugt als Breitbandlambdasonde ausgebildet. Eine Messstelle der Messeinheit 14 ist vorzugsweise in oder an dem Produktfluid 22 stromabwärts der elektrochemischen Umwandlungseinheit 26. Die Messstelle der Messeinheit 14 kann zwischen der Brennstoffelektrode 30 und der Abzweigung in die Rezirkulationsleitung 42, zwischen der Abzweigung in die Rezirkulationsleitung 42 und dem Nachbrenner 40 oder innerhalb der Rezirkulationsleitung 42 angeordnet sein.

Die elektrochemische Vorrichtung 12 umfasst vorzugsweise eine weitere Messeinheit 20. Die weitere Messeinheit 20 ist bevorzugt als Breitbandlambdasonde ausgebildet. Eine Messstelle der weitern Messeinheit 20 ist vorzugsweise in oder an dem Eduktfluid stromaufwärts der elektrochemischen Umwandlungseinheit 26 und vorzugsweise stromabwärts des Reformers 38.

Figur 2 zeigt die Messeinheit 14. Die Messeinheit 14 umfasst eine Messzelle 18. Die Messeinheit 14 umfasst eine Pumpzelle 16. Vorzugsweise umfasst die Messeinheit 14 eine Messkammer 50, welche von der Pumpzelle 16 und der Messzelle 18 begrenzt wird. Die Messkammer 50 weist vorzugsweise eine Diffusionsbarriere 52 auf, um eine Austauschrate von Produktfluid 22 in der Messkammer 50 mit Produktfluid 22 außerhalb der Messkammer 50 festzusetzen. Das Produktfluid 22 umfasst im einfachsten Fall, insbesondere bei einem reinen

Wasserstoffbetrieb, Wasserstoff $H_2$ und Wasser $H_2O$. Bei Verwendung eines kohlenstoffhaltigen, insbesondere kohlenwasserstoffhaltigen, Eduktfluids, kann das Produktfluid 22 zusätzlich Kohlenstoffdioxid, Kohlenstoffmonoxid und/oder Kohlenwasserstoffreste, insbesondere Reste an Methan, umfassen.

Die Messezelle 18 ist vorzugsweise dazu vorgesehen, eine Nernstspannung $U_N$ zu erfassen, die sich aufgrund eines Unterschieds in einem Sauerstoffgehalt des sich in der Messkammer 50 befindlichen Produktfluids 22 zu einem Sauerstoffgehalt einer Sauerstoffreferenz 54, beispielsweise Umgebungsluft und/oder ein Industriegas mit definiertem Sauerstoffgehalt, einstellt. Die Pumpzelle 16 ist vorzugsweise dazu vorgesehen, Sauerstoff $O^{2-}$ in oder aus der Messkammer 50 zu pumpen, um ein stöchiometrisches Verbrennungsluftverhältnis in der Messkammer 50 zu erzeugen. Die Pumpzelle 16 wird vorzugsweise in Abhängigkeit von der erfassten Nernstspannung $U_N$ geregelt, um das stöchiometrische Verbrennungsluftverhältnis zu erreichen. Vorzugsweise ist die Messeinheit 14 dazu vorgesehen, einen elektrischen Pumpstrom $I_P$ der Pumpzelle 16, der eingestellt wird, um das stöchiometrische Verbrennungsluftverhältnis zu erreichen, auszugeben.

Alternativ, insbesondere bei Verwendung der Messeinheit 14 als Sprunglambdasonde, d.h. ohne Pumpzelle 16, ist die Messeinheit 14 dazu vorgesehen, die Nernstspannung $U_N$ der Messzelle 18 auszugeben.

Figur 3 zeigt das Verfahren 10 zum Betrieb der elektrochemische Vorrichtung 12. Die Pumpzelle 16 wird während eines Betriebs der elektrochemischen Vorrichtung 12 diskontinuierlich betrieben. In einer Initialisierung 56 des Verfahren 10, bringt die Steuer- oder Regeleinheit 24 die elektrochemische Vorrichtung 12 vorzugsweise in einen stationären Betriebszustand, optional unter Verwendung der Messeinheit 14 und/oder der weiteren Messeinheit 20 mit angeschalteter Pumpzelle 16. Bei Erreichen eines stationären Zustands bringt die Steuer- oder Regeleinheit 24 die Messeinheit 14 und/oder die weitere Messeinheit 20 in eine Messkonfiguration 58. In der Messkonfiguration 58 ist die Pumpzelle 16 deaktiviert, insbesondere wird der Pumpstrom $I_P$ unterbrochen oder betragsmäßig unterhalb eines Pumpstromschwellwerts gehalten. In einem abgeschalteten Zustand der Pumpzelle 16 erfasst die Steuer- oder Regeleinheit 24 mittels der Messzelle 18 eine Degradation der elektrochemischen Vorrichtung 12. Die Messeinheit 14 gibt in der Messkonfiguration 58 vorzugsweise die Nernstspannung $U_N$ oder eine davon abgeleitete Größe, beispielsweise ein Verbrennungsluftverhältnis, eine Brennstoffnutzung, ein Sauerstoffdefizit des Produktfluids 22, als Betriebsparameter aus. Eine weitere Pumpzelle der weiteren Messeinheit 20 wird in der Messkonfiguration 58 von der Steuer- oder Regeleinheit 24 vorzugsweise abgeschaltet, um analog einen Nernstspannung $U_N$ oder eine davon abgeleitete Größe, beispielsweise ein Verbrennungsluftverhältnis oder ein Sauerstoffdefizit des Eduktfluids, zu ermitteln. Die Steuer- oder Regeleinheit 24 ermittelt die Degradation vorzugsweise in Abhängigkeit von dem von der Messeinheit 14 ausgegeben Betriebsparameter und in Abhängigkeit von dem von der weiteren Messeinheit 20 ausgegeben Betriebsparameter, insbesondere zu einer Modellierung eines räumlichen Verlaufs des Betriebsparameter über die elektrochemische Umwandlungseinheit 26. Bei einem, insbesondere reinem, Wasserstoffbetrieb der elektrochemischen Vorrichtung 12, ermittelt die Steuer- oder Regeleinheit 24 die Degradation alternativ in Abhängigkeit von einer Brennstoffnutzung der elektrochemischen Umwandlungseinheit 26, und in Abhängigkeit von einer Ausgabe der Messzelle 18 bei einem abgeschalteten Zustand der Pumpzelle 16. Bevorzugt ermittelt die Steuer- oder Regeleinheit 24 einen Wert des Betriebsparameters an einem Einlass der elektrochemischen Umwandlungseinheit 26 in Abhängigkeit von dem von der Messeinheit 14 erfassten Wert des Betriebsparameters und der Brennstoffnutzung der elektrochemischen Umwandlungseinheit 26, insbesondere anstelle einer Erfassung des Betriebsparameters mit der weiteren Messeinheit 20. Mittels eines maschinellen Lernprozesses wird optional eine Korrektur einer Ausgabe der Messeinheit 14 und/oder der weiteren Messeinheit 20 ermittelt.

Das Verfahren 10 umfasst vorzugsweise eine weitere Messkonfiguration 62. In der weiteren Messkonfiguration 62 schaltet die Steuer- oder Regeleinheit 24 die Pumpzelle 16 der Messeinheit 14 und/oder der weiteren Messeinheit 20 vorzugsweise an und regelt den Pumpstrom $I_P$ in Abhängigkeit von der Nernstspannung $U_N$. Die Pumpzelle 16 wird automatisch aktiviert, wenn die Messzelle 18 in einer Änderungsdetektion 60 des Verfahrens 10 eine Veränderung einer Zusammensetzung des von der Messeinheit 14 überwachten Produktfluids 22 detektiert. Die Pumpzelle 16 wird automatische aktiviert, wenn die Steuer- oder Regeleinheit 24 in der Änderungsdetektion 60 des Verfahren 10 einen Lastwechsel detektiert oder vorgibt. Solange keine Veränderung festgestellt wird, wird die Messkonfiguration 58 aufrechterhalten. Die Pumpzelle 16 wird in einem stationären Betriebszustand der elektrochemischen Vorrichtung 12 in regelmäßigen Abständen aktiviert um den Betriebsparameter zu kontrollieren.

Das Verfahren 10 umfasst vorzugsweise einen Anpassungsschritt 64, in welchem die Steuer- oder Regeleinheit 24 eine Einstellung der elektrochemischen Vorrichtung 12, insbesondere eine Förderrate einer der Fördereinheiten 32, 34, 44, in Abhängigkeit von dem Betriebsparameter, insbesondere der veränderten Zusammensetzung des Produktfluids und/oder des Eduktfluids, anpasst. Der Anpassungsschritt 64 wird vorzugsweise solange wiederholt, bis die Steuer- oder Regeleinheit 24 in einer Stabilitätsanalyse 66 einen stationären Zustand der elektrochemischen Vorrichtung 12 feststellt. Befindet sich die elektrochemische Vorrichtung 12 nach dem Anpassungsschritt 64 in einem stationären Zustand, wechselt die Steuer- oder Regeleinheit 24 vorzugsweise wieder zu der Messkonfiguration 58.

Die Messzelle 18 wird während eines Betriebs der elektrochemischen Vorrichtung 12, insbesondere unabhängig von den Messkonfigurationen 58, 62, kontinuierlich betrieben. Die Messeinheit 14 wird während eines Betriebs der elektrochemischen Vorrichtung 12 kontinuierlich, insbesondere unabhängig von den Messkonfigurationen 58, 62, temperiert.

**Patentansprüche**

1. Verfahren zum Betrieb einer elektrochemische Vorrichtung, insbesondere einer Brennstoffzellenvorrichtung, wobei zumindest eine Messeinheit (14, 20), welche zumindest eine Pumpzelle (16) und zumindest eine Messzelle (18) umfasst, in zumindest einem Verfahrensschritt zumindest einen Betriebsparameter der elektrochemischen Vorrichtung erfasst, **dadurch gekennzeichnet, dass** die Pumpzelle (16) während eines Betriebs der elektrochemischen Vorrichtung diskontinuierlich betrieben wird, um in einem abgeschalteten Zustand der Pumpzelle (16) mittels der Messzelle (18) eine Degradation der elektrochemischen Vorrichtung zu erfassen.

2. Verfahren nach Anspruch 1, **dadurch gekennzeichnet, dass** die Messzelle (18) während eines Betriebs der elektrochemischen Vorrichtung kontinuierliche betrieben wird.

3. Verfahren nach Anspruch 1 oder 2, **dadurch gekennzeichnet, dass** die Pumpzelle (16) automatisch aktiviert wird, wenn die Messzelle (18) eine Veränderung einer Zusammensetzung eines von der Messeinheit (14, 20) überwachten Produktfluids (22) detektiert.

4. Verfahren nach einem der vorhergehenden Ansprüche, **dadurch gekennzeichnet, dass** die Pumpzelle (16) in einem stationären Betriebszustand der elektrochemischen Vorrichtung in regelmäßigen Abständen aktiviert wird um den Betriebsparameter zu kontrollieren.

5. Verfahren nach einem der vorhergehenden Ansprüche, **dadurch gekennzeichnet, dass** die Pumpzelle (16) automatische aktiviert wird, wenn eine Steuer- oder Regeleinheit (24) der elektrochemischen Vorrichtung einen Lastwechsel detektiert oder vorgibt.

6. Verfahren nach einem der vorhergehenden Ansprüche, **dadurch gekennzeichnet, dass** bei einem Wasserstoffbetrieb der elektrochemischen Vorrichtung, die Degradation in Abhängigkeit von einer Brennstoffnutzung der elektrochemische Vorrichtung und in Abhängigkeit von einer Ausgabe der Messzelle (18) bei einem abgeschalteten Zustand der Pumpzelle (16) ermittelt wird.

7. Verfahren nach einem der vorhergehenden Ansprüche, **dadurch gekennzeichnet, dass** die Messeinheit (14, 20) während eines Betriebs der elektrochemischen Vorrichtung kontinuierlich temperiert wird.

8. Verfahren nach einem der vorhergehenden Ansprüche, **dadurch gekennzeichnet, dass** als Messeinheit (14, 20) eine Breitbandlambdasonde verwendet wird.

9. Verfahren nach einem der vorhergehenden Ansprüche, **dadurch gekennzeichnet, dass** mittels eines maschinellen Lernprozesses eine Korrektur einer Ausgabe der Messeinheit (14, 20) ermittelt wird.

10. Elektrochemische Vorrichtung, insbesondere Brennstoffzellenvorrichtung, mit zumindest einer Messeinheit (14, 20) zu einer Durchführung eines Verfahrens nach einem der vorhergehenden Ansprüche.

FIG. 1

**FIG. 2**

10

56

58

60

62

64

66

FIG. 3

Europäisches
Patentamt

European
Patent Office

Office européen
des brevets

**EUROPÄISCHER RECHERCHENBERICHT**

**Nummer der Anmeldung**

**EP 23 19 7295**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 494 025 A1 (SULZER HEXIS AG [CH]) 5. Januar 2005 (2005-01-05) | 10 | INV. H01M8/0444 H01M8/04664 H01M8/04791 |
| A | * Spalten 16-26; Abbildungen 1-4 * ----- | 1-9 | |
| A | DE 10 2007 009157 A1 (BOSCH GMBH ROBERT [DE]) 28. August 2008 (2008-08-28) * das ganze Dokument * ----- | 1-10 | ADD. H01M8/12 |
| A | DE 198 18 317 A1 (SIEMENS AG [DE]) 4. November 1999 (1999-11-04) * das ganze Dokument * ----- | 1-10 | |

**RECHERCHIERTE SACHGEBIETE (IPC)**

H01M

Der vorliegende Recherchenbericht wurde für alle Patentansprüche erstellt

| Recherchenort | Abschlußdatum der Recherche | Prüfer |
|---|---|---|
| München | 5. Februar 2024 | Brune, Markus |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument

......................................................................
& : Mitglied der gleichen Patentfamilie, übereinstimmendes
  Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 19 7295

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-02-2024

| Im Recherchenbericht angeführtes Patentdokument | Datum der Veröffentlichung | Mitglied(er) der Patentfamilie | Datum der Veröffentlichung |
|---|---|---|---|
| EP 1494025 A1 | 05-01-2005 | AT E368850 T1 | 15-08-2007 |
| | | AU 2004202985 A1 | 20-01-2005 |
| | | CN 1576837 A | 09-02-2005 |
| | | DK 1494025 T3 | 17-09-2007 |
| | | EP 1494025 A1 | 05-01-2005 |
| | | JP 4796756 B2 | 19-10-2011 |
| | | JP 2005024561 A | 27-01-2005 |
| | | KR 20050004004 A | 12-01-2005 |
| | | US 2005000832 A1 | 06-01-2005 |
| | | US 2009057163 A1 | 05-03-2009 |
| DE 102007009157 A1 | 28-08-2008 | CN 101256165 A | 03-09-2008 |
| | | DE 102007009157 A1 | 28-08-2008 |
| | | FR 2913771 A1 | 19-09-2008 |
| DE 19818317 A1 | 04-11-1999 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102020202874 A1